Europäisches Patentamt

European Patent Office

Office européen des brevets

(11) Numéro de publication: **0 210 880**
**B1**

## (12) FASCICULE DE BREVET EUROPEEN

(45) Date de publication du fascicule du brevet:
**04.01.89**

(21) Numéro de dépôt: **86401280.2**

(22) Date de dépôt: **12.06.86**

(51) Int. Cl.⁴: **B60T 8/28**

(54) **Correcteur de freinage asservi à la décélération.**

(30) Priorité: **20.06.85 FR 8509368**

(43) Date de publication de la demande:
**04.02.87 Bulletin 87/6**

(45) Mention de la délivrance du brevet:
**04.01.89 Bulletin 89/1**

(84) Etats contractants désignés:
**DE GB IT**

(56) Documents cités:
**EP-A- 0 063 862**
**EP-A- 0 076 751**
**EP-A- 0 184 955**
**DE-A- 2 911 325**
**FR-A- 2 550 747**
**GB-A- 2 069 637**
**GB-A- 2 144 189**
**JP-A-59 192 657**

(73) Titulaire: **BENDIX France, 126, rue de Stalingrad,**
**F-93700 Drancy(FR)**

(72) Inventeur: **Carre, Jean-Jacques, 59, Boulevard de l'Est,**
**F-93340 Le Raincy(FR)**

(74) Mandataire: **Lejet, Christian et al, Division Technique**
**Service Brevets BENDIX Europe 126, rue de Stalingrad,**
**F-93700 Drancy(FR)**

ACTORUM AG

## Description

La présente invention se rapporte aux correcteurs de freinage asservis à la décélération du véhicule sur lequel ils sont installés.

Lors d'un freinage d'un véhicule, il est souhaitable de limiter la pression de freinage des roues arrière par rapports aux roues avant au-dessus d'un seuil de décélération prédéterminé, les roues arrière étant plus particulièrement prédisposées au blocage en raison de leur charge réduite.

On connaît du document EP-A 0 184 955 (publié le 18.6.86, cité selon l'Article 54 (3) de la CBE, correspondant au préambule de la revendication 1 et à la demande de brevet français 84 17728) un correcteur de freinage asservi à la décélération du véhicule sur lequel est monté le correcteur et qui comprend une masse montée à coulissement à l'intérieur du correcteur et déplaçable sous l'effet de la décélération du véhicule pour venir fermer un clapet qui contrôle un circuit de freinage. Le correcteur comporte, en outre, un piston, sollicité par un ressort ayant un tarage prédéterminé, qui empêche la masse de se déplacer et fermer le clapet avant que le seuil de décélération n'ait atteint un niveau prédéterminé.

Malgré ses avantages, ce dispositif présente de légers inconvénients en ce que les temps de réponse peuvent être trop longs en raison des frottements hydrodynamiques de la masse qui est entièrement immergée dans le fluide hydraulique.

La présente invention a donc pour objet de proposer un correcteur de freinage asservi à la décélération ayant des temps de réponse améliorés.

Pour ce faire, l'invention concerne un correcteur de freinage asservi à la décélération, pour système de freinage d'un véhicule selon la revendication 1, comprenant un corps comprenant une chambre une entrée reliée à la chambre et destinée à être reliée à une source de fluide sous pression, une sortie reliée à la chambre et destinée à être reliée aux freins du véhicule, une masse montée à coulissement dans la chambre et sensible à la décélération du véhicule, un piston sollicitant la masse vers une position de repos et formant clapet pour une valve de coupure et un by-pass comportant une restriction by-passant la valve de coupure et obturable par la masse quand cette dernière se déplace sous l'effet d'une décélération.

D'autres caractéristiques et avantages de la présente invention ressortiront de la description suivante de deux modes de réalisation, donnés à titre illustratif mais nullement limitatif, faite en relation avec les dessins annexés, sur lesquels :

Les figures 1 et 2 représentent chacune une vue en section longitudinale d'un correcteur de freinage selon l'invention;

Les figures 3 à 5 représentent chacune une vue partielle en coupe longitudinale d'un mode de réalisation de l'invention, représentant différentes conditions de fonctionnement; et

Les figures 6 à 8 représentent chacune une vue partielle en coupe longitudinale d'un deuxième mode de réalisation.

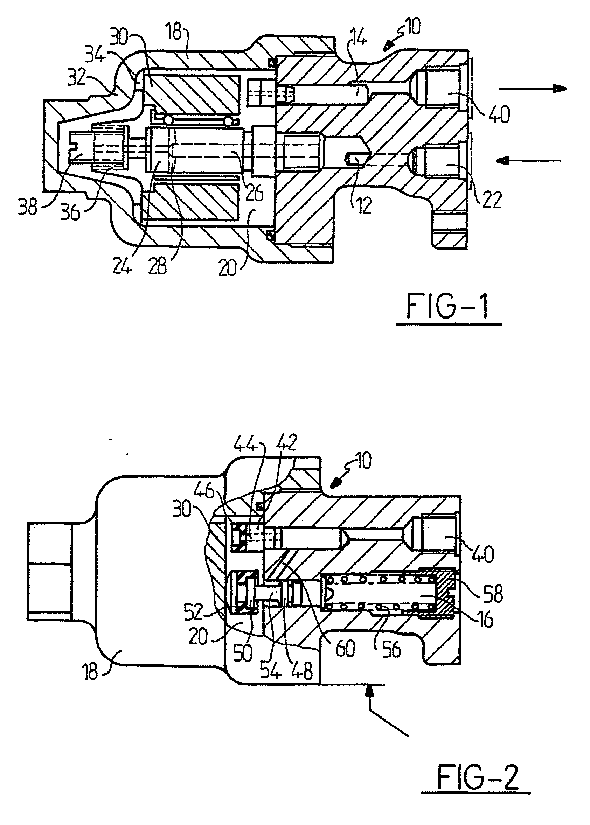

Comme représenté sur les figures 1 à 5, le correcteur de freinage comprend un corps 10 pourvu de trois alésages étagés 12, 14 et 16. Un carter 18 est monté fixe sur le corps 10 et définit avec lui une chambre 20. Le premier alésage 12 est pourvu d'un orifice d'entrée fileté 22 qui est destiné à être relié à un générateur de fluide sous pression (non représenté), par exemple un maître-cylindre. A l'autre extrémité de l'alésage 12 est monté fixe un élément d'axe 24 qui comprend un alésage longitudinal 26 relié à une ouverture transversale 28. Une masse annulaire 30 est montée à coulissement sur l'élément d'axe 24 par l'intermédiaire d'un roulement à billes 32. La masse 30 est normalement retenue dans sa position de repos, illustrée sur la figure 1, contre une butée 34 par un ressort de rappel 36 qui est monté à une extrémité sur l'élément d'axe 24 par l'intermédiaire d'une vis réglable 38.

Le deuxième alésage 14 comporte un orifice de sortie fileté 40 destiné à être relié aux freins des roues arrière du véhicule (non représentés). A l'autre extrémité de l'alésage 14 est monté un siège de clapet 42 ayant un alésage longitudinal 44 de faible diamètre susceptible de relier l'alésage 14 à la chambre 20 (premier passage). Le siège de clapet 42 comporte un joint annulaire 46 qui, quand la masse vient en appui sur le siège de clapet (comme sera décrit ultérieurement) coopère avec cette dernière et ferme l'alésage 44.

Le troisième alésage 16 comporte un piston étagé 48 qui comprend une tête 50, sur laquelle est monté un joint annulaire 52, et une partie 54 de diamètre réduit. Le piston 48 est sollicité vers la gauche - en regardant les dessins - par un ressort 56 dont le tarage est réglable par une vis 58. Les deux alésages 14 et 16 sont reliés par un passage latéral 60 (deuxième passage).

Le correcteur est monté dans un véhicule de façon à ce que l'axe longitudinal du correcteur soit parallèle à celui du véhicule, le carter 18 étant orienté vers l'arrière.

Le correcteur ainsi décrit fonctionne comme suit :

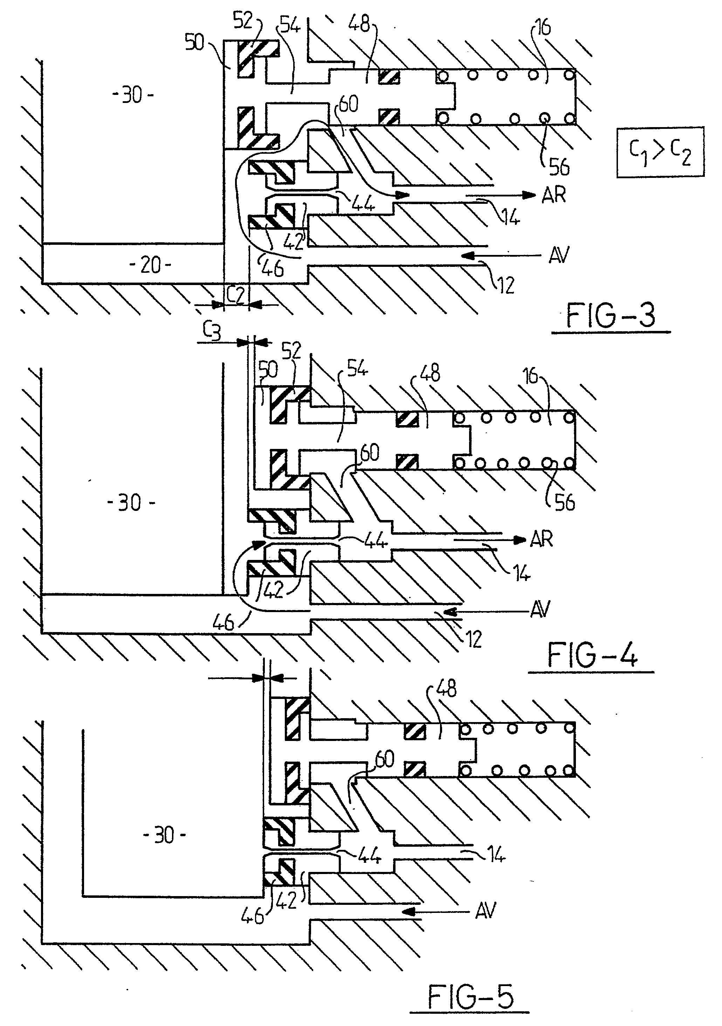

Durant une première phase du freinage, tant que la combinaison de la décélération et de la pression dans la chambre 20 reste inférieure à un seuil prédéterminé, la masse 30 reste immobile contre la butée 34 sous l'effet combiné du piston 48 et du ressort de rappel 36. Comme représenté sur la figure 3, le fluide hydraulique passe du maître-cylindre par l'alésage 12, le passage latéral 60 et l'alésage 14 vers les freins arrière du véhicule. Le fluide passe prioritairement par le passage latéral 60 plutôt que pas l'alésage 44 à cause de la différence de résistance hydraulique. La pression dans la chambre 20 augmente et agit sur la surface du piston 48.

Lors d'une montée en pression rapide dans la chambre 20, venant à dépasser un seuil prédéterminé, le piston 48 est déplacé vers la droite et est amené en butée contre le corps 10 du correcteur comme représenté sur la figure 4. Dans cette position, le joint annulaire 52 ferme le passage latéral 60. Le seul passage disponible au fluide est donc l'alésage de faible diamètre 44. La montée en pression des freins arrière est ainsi limitée par l'alésage 44.

Sur la figure 5 est représentée la position du correcteur quand les seuils de décélération et de pression dans la chambre 20 ont été dépassés. La masse 30 s'est déplacée vers la droite et est venue en butée sur le joint annulaire 46 du siège de clapet 42, fermant l'alésage 44. Le passage vers les freins arrière est ainsi complètement fermé et la pression de freinage dans les freins arrière demeure inchangée.

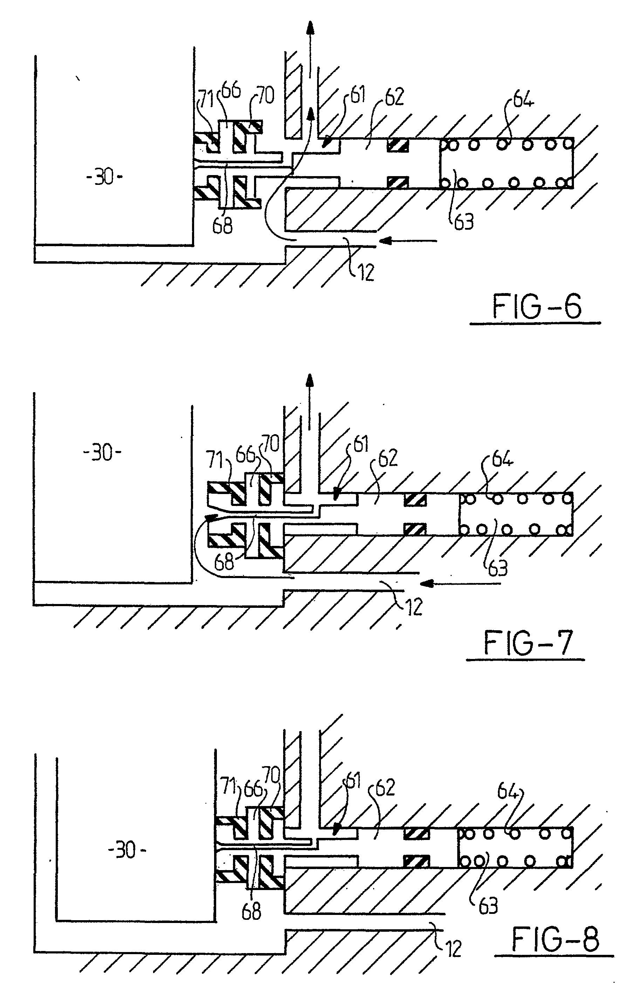

Sur les figures 6 à 8 est représenté un deuxième mode de réalisation où le siège de clapet 42 et le piston 48 sont remplacés par un moyen de valve unique 61 monté coulissant dans un alésage 63. Le moyen de valve comprend un élément de piston 62 qui, comme le piston 48, est sollicité vers la gauche par un ressort réglable 64. Le moyen de valve 61 comporte de plus un élément de clapet 66 qui comprend un alésage 68 de faible diamètre et deux joints annulaires 70, 71.

Sur la figure 6 est représenté le correcteur dans sa position de repos qu'il maintient tant que la combinaison de la décélération et de la pression dans la chambre 20 reste inférieure à un seuil prédéterminé. La masse 30 reste immobile contre la butée 34 sous l'effet combiné du ressort de rappel 36 et du ressort 64 du moyen de valve 61. Le fluide hydraulique est libre de passer du maître-cylindre par l'alésage 12 et un alésage 72 vers les freins du véhicule.

Lors d'une montée en pression rapide dans la chambre 20 qui dépasse un seuil prédéterminé, le moyen de valve se déplace vers la droite et le joint 70 vient en butée contre le corps 10 du correcteur comme représenté sur la figure 7. Dans cette position, le seul passage hydraulique disponible est donc l'alésage 68 de faible diamètre. La montée en pression des freins arrière est ainsi limitée par l'alésage 68.

Quand la combinaison de pression et de décélération dépasse le seuil prédéterminé, la masse 30 se déplace vers la droite et vient en butée sur le joint annulaire 71 comme représenté sur la figure 8. L'alésage 68 est ainsi fermé et la pression de freinage des freins arrière reste invariable.

**Revendications**

1. Correcteur de freinage asservi à la décélération, pour système de freinage d'un véhicule, comprenant un corps (10) comprenant une chambre (20), une entrée (12) reliée à la chambre (20) et destinée à être reliée à une source de fluide sous pression, une sortie (14) reliée à la chambre (20) et destinée à être reliée aux freins du véhicule, une masse (30) montée à coulissement dans la chambre (20) et sensible à la décélération du véhicule, un piston (48, 62) sollicitant la masse (30) vers une position de repos par un ressort (56), et une restriction (44, 68) formant un premier passage entre la chambre (20) et la sortie (14) et obturable par la masse (30) quand cette dernière se déplace sous l'effet d'une décélération, caractérisé en ce que le piston (48, 62) comprend un clapet pour une valve de coupure (52, 70) dans un deuxième passage (60) entre la chambre (20) et la sortie (14), et en ce que ladite restriction (44, 68) forme un by-pass (42, 61) pour la valve de coupure (52, 70), l'obturation de la restriction (44, 68) s'effectuant séquentiellement après la fermeture de la valve de coupure (52, 70).

2. Correcteur de freinage selon la revendication 1, caractérisé en ce que la valve de coupure (52, 70) et le by-pass (42, 61) sont disposés en parallèle.

3. Correcteur de freinage selon la revendication 2, caractérisé en ce que la valve de coupure (52, 70) et le by-pass (42, 61) sont agencés coaxialement.

**Patentansprüche**

1. Verzögerungsabhängiger Bremsregler für eine Fahrzeug-Bremsanlage, mit einem Körper (10), der eine Kammer (20) aufweist, einem Einlaß (12), der mit der Kammer (20) verbunden und an einer Druckmittelquelle anschließbar ist, einem Auslaß (14), der mit der Kammer (20) verbunden und an den Fahrzeugbremsen anschließbar ist, einer Masse (30), die in der Kammer gleitbar gelagert ist und auf die Fahrzeugverzögerung anspricht, einem Kolben (48, 62), der die Masse (30) über eine Feder (56) in Richtung auf eine Ruhestellung vorspannt, und einer Drosselstelle (44, 68), die einen ersten Kanal zwischen der Kammer (20) und dem Auslaß (14) bildet und durch die Masse (30) verschließbar ist, wenn sich die letztere unter der Wirkung einer Verzögerung verschiebt, dadurch gekennzeichnet, daß der Kolben (48, 62) ein Ventilglied für ein Trennventil (52, 70) in einem zweiten Kanal (60) zwischen der Kammer (20) und dem Auslaß (14) aufweist und daß die Drosselstelle (44, 68) einen Bypass (42, 61) für das Trennventil (52, 70) bildet, wobei das Verschließen der Drosselstelle (44, 68) infolge nach dem Schließen des Trennventils (52, 70) erfolgt.

2. Bremsregler nach Anspruch 1, dadurch gekennzeichnet, daß das Trennventil (52, 70) und der Bypass (42, 61) parallel geschaltet sind.

3. Bremsregler nach Anspruch 2, dadurch gekennzeichnet, daß das Trennventil (52, 70) und der Bypass (42, 61) koaxial angeordnet sind.

**Claims**

1. Deceleration-braking corrector for the brake system of a vehicle, comprising a body (10) having a chamber (20), an inlet (12) which is connected to the chamber (20) and is intended to be connected to a pressurized fluid source, an outlet (14) which is connected to the chamber (20) and is intended to be connected to the brakes of the vehicle, a mass (30) which is slideably mounted inside the chamber (20) and is moveable in response to the deceleration of the vehicle, a piston (48, 62) pushing the mass (30) towards a rest position by a spring (56), and a restriction (44, 68) forming a first channel between the chamber (20) and the outlet (14) and which can be sealed off by the mass (30) when the latter moves in response to a deceleration characterized in that the piston (48, 62) comprises a valve for a shut-off valve (52, 70) in a second channel (60) between the chamber (20) and the outlet (14), and in that the said restriction (44, 68) forms a by-pass (42, 61) for the shut-off valve (52, 70), the closure of the restriction (44, 68) being carried out in sequence after the closure of the shut-off valve (52, 70).

2. Deceleration braking corrector according to claim 1, characterized in that the shut-off valve (52, 70) and the by-pass (42, 61) are disposed in parallel.

3. Deceleration braking corrector according to claim 2, characterized in that the shut-off valve (52, 70) and the by-pass (42, 61) are disposed coaxially.

FIG-1

FIG-2

FIG-3

$C_1 > C_2$

FIG-4

FIG-5

FIG-6

FIG-7

FIG-8